# EUROPEAN PATENT SPECIFICATION

(11) **EP 4 155 579 B1**
(45) Date of publication and mention of the grant of the patent: **24.07.2024**
(21) Application number: 22382640.5
(22) Date of filing: 05.07.2022
(51) Int. Cl.: F16H 7/06, B62M 9/16, F16H 7/08

(54) **CHAIN TENSIONER DEVICE**
KETTENSPANNERVORRICHTUNG
DISPOSITIF TENDEUR DE CHAÎNE

(30) Priority: 22.09.2021 ES 202131879 U
(43) Date of publication of application: 29.03.2023
(73) Proprietor: Stark Future, S.L., 08870 Sitges (Barcelona) (ES)
(72) Inventor: WASS, Anton, SITGES (BARCELONA) (ES); SOUCY, Paul, SITGES (BARCELONA) (ES)
(74) Representative: Espiell Gomez, Ignacio

(56) References cited:
- EP-A1- 2 998 214
- US-A1- 2006 055 147
- US-A1- 2008 194 364

## Description

### OBJECT OF THE INVENTION

The invention, as stated in the title of this specification, refers to a chain tensioner device contributing, to the function to which it is designed, with advantages and characteristics that are disclosed in detail thereafter and that means an improvement of the current state-of-the art.

The object of this invention falls on a device that, applicable to the rear wheel of the motorcycles, bicycles and similar vehicles with chain gear, has the aim to allow regulating the chain tension providing the advantage of facilitating the said operation against the currently known systems for the same aim.

### FIELD OF APPLICATION OF THE INVENTION

The field of application of this invention is within the automotive sector, in particular focusing in the industry engaged in manufacturing accessories for motorcycles, bicycles and similar vehicles with chain gear and more concretely in the field of chain tension regulating systems.

### BACKGROUND OF THE INVENTION

As it is known, in the motorcycles and other similar vehicles with chain gear, it is very important to correctly regulate the chain tension, for which it is necessary to correct the position of the rear wheel shaft.

Currently, to carry out the said regulation, on both sides of the rear wheel shaft, there are two screws provided with nuts and safety nut that have to be loosened to be able to move the wheel and tightened again according to the required regulation, having to watch visual marks provided between the frame and the wheel and, normally, the suitable position of which is stated by the manufacturer.

The problem is that this operation, in addition to be complicated, requires using two tools, one to hold the safety nut and another to rotate the nut, therefore the handling is difficult.

In addition, another significant drawback is that the guideways to achieve that the alignment of the shaft is correct and regulate the movement on both sides of the wheel are not very accurate because it is dealt with visual marks and it is required to guess in order that they are identical on both sides of the wheel, so that, if the individual who carries out the operation is an amateur instead of a trained operator, maybe he does not achieve a correct alignment of the shaft and, consequently, that means a risk when driving the vehicle.

It would be expected, therefore, to count on a simpler system allowing to avoid the said drawbacks to correctly regulate the chain tension assuring a correct alignment of the shaft and allowing that the user himself, without having to have recourse to specialized workshops, can carry out the said operation, the objective of this invention being to develop a tensioner device with the said premises.

On the other hand, and as reference of the current state-of-the-art, it shall be pointed out that, at least the applicant is not aware of the existence of any other chain tensioner device presenting technical and structural characteristics same or similar to those herein claimed.

Document US2006055147A1 discloses a tension-adjusting mechanism for adjusting tension on an endless loop member associated with a driven transmission gear is operable to adjust the tension of an endless loop member on a vehicle.

### EXPLANATION OF THE INVENTION

The chain tensioner device that the invention proposes is configurated as the suitable solution to the above stated objective, the characterizing details making it possible and that distinguish it conveniently appearing in the final claims attached to this description.

Concretely, what the invention proposes, it was stated before, is a device that, applicable on both sides of the rear wheel of a motorcycle, bicycle or other similar vehicle with chain gear, has the aim to allow regulating the chain tension by means of the wheel shaft positioning with respect to the opposite area of the gear, which presents the advantage to count on such a configuration that facilitates the said operation against the currently known systems for the same purpose.

For this and more specifically, the tensioner device of the invention comprises, the features of claim 1.

In addition, in the preferred embodiment of the invention, the bolt is a headless bolt that remains completely inserted in the part integral with the wheel shaft, being provided at its base, that means, at the opposite end of the pushing tip, of a machined recess for inserting the screwing tool , for example a Torx tool, that is for a type of screw head characterized in that it is six-point star- shaped or an hex or allen type tool, the said recess remaining accessible from the rear part of the shaft, though a hole pierced in the said part to that effect.

With all this, the device provides the advantage that the device can be activated from the rear part using only one tool instead of two, as it occurs with the preceding nut and safety nut system. In addition, it offers full liberty to rotate the tool 360 degrees or more, without changing the position of the tool.

Another advantage is that the user can easily make coincident the position on each side, because each full turn of the bolt presents a given number of clicks, that is created by means of the slot on the chain adjustment bolt and the ball of the spring mechanism that makes a click in the said slot. Last, another advantage is that only one tool has to be used and not two, because there is no longer a safety nut, because the spring ball mechanism keeps the bolt in its place.

### DESCRIPTION OF THE DRAWINGS

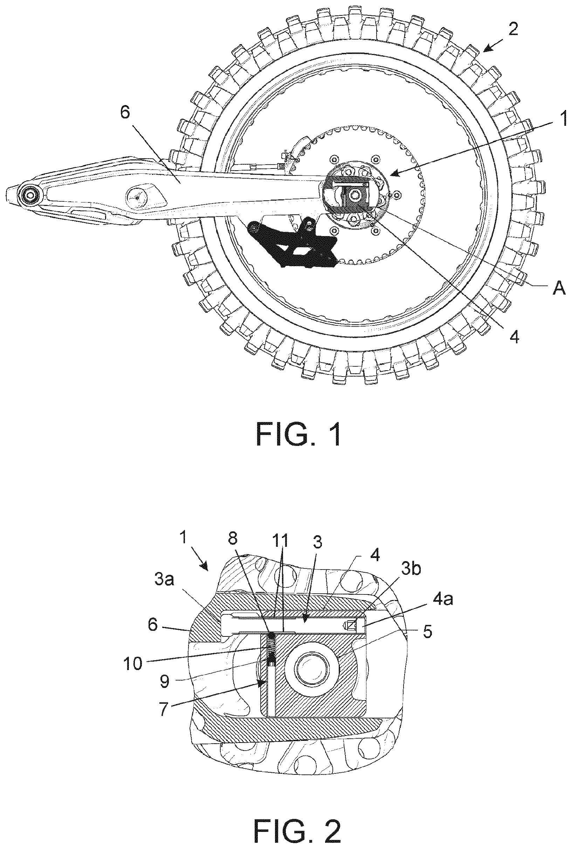

To complement the description being carried out and in order to assist to best understanding the characteristics of the invention, attached to this specification, as an integral part thereof, there is set of drawings in which, for illustration and no limitation purpose, the following has been represented:
The figure number 1.- It shows a side elevation view of an example of rear wheel of a motorcycle with chain gear in which an example of the chain tensioner device of the invention has been incorporated, the general arrangement of the device on one of the sides of the wheel can be seen in a sectional portion of the said area;
the figure number 2.-It shows an enlarged view of the detail A appearing in the figure 1 and that shows the sectional portion of the area of the wheel in which the device object of the invention is incorporated, the parts and elements it comprises can be seen as well as their configuration and arrangement; and
the figure number 3.- It shows an enlarged view of the retractable ball mechanism and the bolt that comprises the device of the invention their configuration being seen with more details.

### PREFERRED EMBODIMENT OF THE INVENTION

Seen the said figures, and according to the numerals adopted, a nonlimiting example of embodiment of the chain tensioner device of the invention can be seen, which comprises what is described in detail below.

Thus, as it can seen in the said figures, the tensioner device (1) of the invention, applicable to be dually incorporated on both sides of the rear wheel (2) of the motorcycle or vehicle on which it is installed, essentially comprises:
- a threaded bolt (3) for adjusting the chain, that remains inserted in a part (4) integral with the wheel shaft (5), arranged in horizonal position, so that the tip (3a) of the said bolt (3), that is preferable flat, presses on a second part (6) integral at the opposite end of the gear, so that tightening or loosening the bolt (3) determines the gap between both parts (4, 6) to regulate the chain tension (not shown), and
- a discretization mechanism of the gap between the first part (4) and the second part (6) comprises at least a retractable element (8) either in the bolt (3) or in the first part (4) that contacts and is fitted in one of the series of slots (11) provided either in the bolt (3) or in the first part (4) so that it is possible to know the tightening or loosening of the bolt (3) applicable in each action.

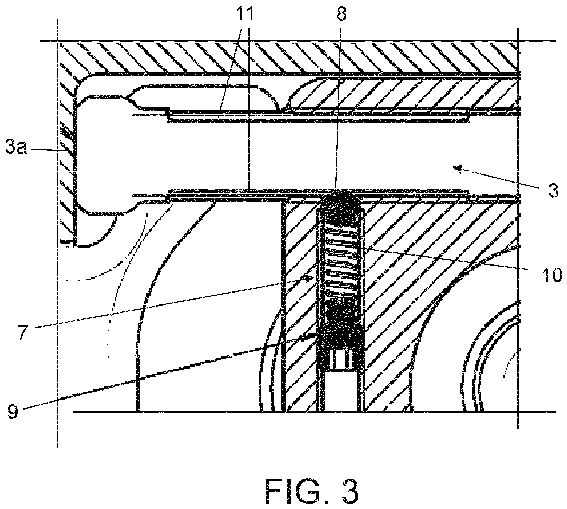

In a first preferred embodiment, as it is shown in the figures 1-3, the discretization mechanism of the gap between the first part (4) and the second part (6) comprises in the first part (4), a retractable ball (8) inserted in the end of a plunger (9) with an internal spring (10) that tends to push the said ball (8) outwards the plunger (9); and
- in the bolt (3) one of the series of slots (11) in which the ball contacts (8) and is fitted.

In a second preferred embodiment, the discretization mechanism of the gap between the first part (4) and the second part (6) comprises
- in the bolt (3), two retractable balls (8) inserted in the ends of a plunger (9) with an internal spring (10) that tends to push the said balls (8) outwards the plunger (9), and
- in the first part (4) one of the series of slots (11) in which the balls (8) contact and are fitted.

In this manner, the said discretization mechanism of the gap between the first part (4) and the second part (6), in addition to keep the bolt (3) in its place, provokes a noise of "click" each time the bolt (3) rotates and the ball (8) passes from one slot (11) to another, when it is screwed or unscrewed through a tool inserted at its base (3b), allowing that the user controls the number of "clicks" to repeat it in an identical manner on each side of the wheel (2).

Preferably, the bolt (3) is a headless bolt that remains completely inserted in the part (4) integral with the wheel shaft (5), being provided at its base (3b) with a machined recess for inserting the tool, for example a Torx or hex tool, and that is accessible from the rear part of the shaft (5), though a hole (4a) pierced in the said part (4).

Sufficiently disclosed the nature of this invention, as well as the manner of implementing it, it is not deemed necessary to extend anymore its explanation in order that any person skilled in the art understands its extends and the advantages arising from it.

## Claims

1. Chain tensioner device that, applicable to be dually incorporated on both sides of the rear wheel (2) of the motorcycle or vehicle on which it is installed, comprises:
- a threaded bolt (3) for adjusting the chain, that remains inserted in a part (4) integral with a wheel shaft (5), arranged in horizonal position, so that a tip (3a) of the said bolt (3) presses on a second part (6) integral at an opposite end of the gear, so that tightening or loosening the bolt (3) determines the gap between both parts (4, 6) to regulate the chain tension, and
- a discretization mechanism of the gap between the first part (4) and the second part (6) comprises at least a retractable element (8) either in the bolt (3) or in the first part (4) that contacts and is fitted in one of the series of slots (11) provided either in the bolt (3) or in the first part (4) so that it is possible to know the tightening or loosening of the bolt (3) applicable in each action.
**characterized in that** a base (3b) of the threaded bolt (3) is accessible from the rear part of the shaft (5), though a hole (4a) pierced in the said part (4).

2. Chain tensioner device, according to the claim 1, wherein the discretization mechanism of the gap between the first part (4) and the second part (6) comprises:
- in the first part (4), a retractable ball (8) inserted in the end of a plunger (9) with an internal spring (10) that tends to push the said ball (8) outwards the plunger (9); and
- in the bolt (3) one of the series of slots (11) in which the ball (8) contacts and is fitted.

3. Chain tensioner device, according to the claim 1, wherein the discretization mechanism of the gap between the first part (4) and the second part (6) comprises:
- in the bolt (3), two retractable balls (8) inserted in the ends of a plunger (9) with an internal spring (10) that tends to push the said balls (8) outwards the plunger (9), and
- in the first part (4) one of the series of slots (11) in which the balls (8) contact and are fitted.

4. Chain tensioner device, according to any of the preceding claims, wherein the bolt (3) is a headless bolt and provided at its base (3b) with a machined recess for inserting the tool, for example a Torx or hex tool.

5. Chain tensioner device, according to any of the preceding claims, wherein the tip (3a) of the bolt (3) is flat.

## Patentansprüche

1. Kettenspannvorrichtung, die anwendbar ist, auf beiden Seiten des Hinterrades (2) des Motorrads oder des Fahrzeugs, an das sie installiert wird, doppelt angebracht zu werden, und Folgendes umfasst:
- einen Gewindebolzen (3) zum Einstellen der Kette, der in ein Teil (4), das in eine Radwelle (5) integriert ist, die in einer horizontalen Position angeordnet ist, eingesteckt bleibt, derart, dass eine Spitze (3a) des Bolzens (3) gegen ein zweites Teil (6) drückt, das in ein gegenüberliegenden Ende des Zahnrads integriert ist, derart, dass ein Anziehen oder Lösen des Bolzens (3) den Spalt zwischen beiden Teilen (4, 6) zum Regulieren der Kettenspannung bestimmt, und
- ein Diskretisierungsmechanismus des Spalts zwischen dem ersten Teil (4) und dem zweiten Teil (6) umfasst mindestens ein einziehbares Element (8), entweder im Bolzen (3) oder im ersten Teil (4), das einen der Reihe von Schlitzen (11), die entweder im Bolzen (3) oder im ersten Teil (4) bereitgestellt sind, berührt und in denselben eingesetzt ist, derart, dass es möglich ist, dass das bei jeder Maßnahme anwendbare Anziehen oder Lösen des Bolzens (3) bekannt ist,
**dadurch gekennzeichnet, dass**
eine Basis (3b) des Gewindebolzens (3) vom hinteren Teil der Welle (5) durch ein Loch (4a), das in das Teil (4) gestanzt ist, erreichbar ist.

2. Kettenspannvorrichtung nach Anspruch 1, wobei der Diskretisierungsmechanismus des Spalts zwischen dem ersten Teil (4) und dem zweiten Teil (6) Folgendes umfasst:
- im ersten Teil (4) eine einziehbare Kugel (8), die in das Ende eines Kolbens (9) eingesteckt ist, mit einer internen Feder (10), die geneigt ist, die Kugel (8) aus dem Kolben (9) zu drücken; und
- im Bolzen (3) einen der Reihe von Schlitzen (11), in dem die Kugel (8) berührt und eingesetzt ist.

3. Kettenspannvorrichtung nach Anspruch 1, wobei der Diskretisierungsmechanismus des Spalts zwischen dem ersten Teil (4) und dem zweiten Teil (6) Folgendes umfasst:
- im Bolzen (3) zwei einziehbare Kugeln (8), die in die Enden eines Kolbens (9) eingesteckt sind, mit einer internen Feder (10), die geneigt ist, die Kugeln (8) aus dem Kolben (9) zu drücken, und
- im ersten Teil (4) einen der Reihe von Schlitzen (11), in dem die Kugeln (8) berühren und eingesetzt sind.

4. Kettenspannvorrichtung nach einem der vorhergehenden Ansprüche, wobei der Bolzen (3) ein kopfloser Bolzen ist, an dessen Basis (3b) eine bearbeitete Ausnehmung zum Einstecken des Werkzeugs, beispielsweise eines Torx- oder eines Sechskantwerkzeugs, bereitgestellt ist.

5. Kettenspannvorrichtung nach einem der vorhergehenden Ansprüche, wobei die Spitze (3a) des Bolzens (3) flach ist.

## Revendications

1. Dispositif tendeur de chaîne qui, applicable pour être doublement incorporé sur les deux côtés de la roue arrière (2) de la moto ou du véhicule sur lequel il est installé, comprend :
- un boulon fileté (3) permettant de régler la chaîne, qui reste inséré dans une partie (4) solidaire d'un arbre de roue (5), agencé en position horizontale, de sorte qu'une pointe (3a) dudit boulon (3) appuie sur une seconde partie (6) solidaire à une extrémité opposée de l'engrenage, de sorte que le serrage ou le desserrage du boulon (3) détermine l'écartement entre les deux parties (4, 6) pour réguler la tension de chaîne, et
- un mécanisme de discrétisation de l'écartement entre la première partie (4) et la seconde partie (6) comprend au moins un élément escamotable (8) dans le boulon (3) ou dans la première partie (4) qui entre en contact et est insérée dans l'une des séries de fentes (11) prévues dans le boulon (3) ou dans la première partie (4) de sorte qu'il est possible de connaître le serrage ou le desserrage du boulon (3) applicable à chaque action,
**caractérisé en ce que**
une base (3b) du boulon fileté (3) est accessible depuis la partie arrière de l'arbre (5), par un trou (4a) percé dans ladite partie (4).

2. Dispositif tendeur de chaîne, selon la revendication 1, dans lequel le mécanisme de discrétisation de l'écartement entre la première partie (4) et la seconde partie (6) comprend :
- dans la première partie (4), une bille escamotable (8) insérée dans l'extrémité d'un piston (9) avec un ressort interne (10) qui tend à pousser ladite bille (8) vers l'extérieur du piston (9) ; et
- dans le boulon (3) une des séries de fentes (11) dans lesquelles la bille (8) entre en contact et est insérée.

3. Dispositif tendeur de chaîne, selon la revendication 1, dans lequel le mécanisme de discrétisation de l'écartement entre la première partie (4) et la seconde partie (6) comprend :
- dans le boulon (3), deux billes escamotables (8) insérées dans les extrémités d'un plongeur (9) avec un ressort interne (10) qui tend à pousser lesdites billes (8) vers l'extérieur du plongeur (9), et
- dans la première partie (4) une de la série de fentes (11) dans lesquelles les billes (8) entrent en contact et sont insérées.

4. Dispositif tendeur de chaîne, selon l'une quelconque des revendications précédentes, dans lequel le boulon (3) est un boulon sans tête et pourvu au niveau de sa base (3b) d'un évidement usiné pour l'insertion de l'outil, par exemple un outil torx ou hexagonal.

5. Dispositif tendeur de chaîne, selon l'une quelconque des revendications précédentes, dans lequel la pointe (3a) du boulon (3) est plate.
